# EUROPÄISCHE PATENTSCHRIFT

(11) **EP 0 451 716 B1**
(45) Veröffentlichungstag und Bekanntmachung des Hinweises auf die Patenterteilung: **11.01.1995**
(21) Anmeldenummer: 91105390.8
(22) Anmeldetag: 05.04.1991
(51) Int. Cl.: B65G 21/02

(54) **Förderbahn für Transporteinrichtungen wie Skids oder dergleichen**
Transporting track for transporting devices like skids or the like
Chemin de transport pour dispositifs de transport du type bac ou similaires

(30) Priorität: 07.04.1990 DE 4011317
(43) Veröffentlichungstag der Anmeldung: 16.10.1991
(73) Patentinhaber: Stotz, Krämer GmbH Materialflussysteme und Automation, D-70806 Kornwestheim (DE)
(72) Erfinder: Schlosser, Gerhard, W-7120 Bietigheim (DE)
(74) Vertreter: Wasmuth, Rolf, Dipl.-Ing.

(56) Entgegenhaltungen:
- EP-A- 0 242 276
- DE-U- 8 411 717
- FR-A- 2 476 042
- US-A- 3 292 772
- PATENT ABSTRACTS OF JAPAN vol. 9, no. 60 (M-364)(1783) 16. März 1985

## Beschreibung

Die Erfindung betrifft eine Förderbahn für Transporteinrichtungen wie Skids oder dergleichen nach dem Oberbegriff des Anspruches 1.

Bekannte Förderbahnen vgl. z.B. US-A-3 292 772 weisen als Zugorgan Ketten auf, die über Transportglieder oder dergleichen die Transporteinheit in Bedienungsrichtung der Kette mitnehmen. Dabei wird die Last der Transporteinheit über die Längsträger abgestützt. Der rückläufige Kettenabschnitt wird dabei in einem geschlossenen Gehäuse geführt, um einer Unfallgefahr durch die umlaufenden Ketten entgegenzuwirken.

Bei Wartungs- und Reparaturarbeiten an der Kette muß das Kettengehäuse geöffnet werden, was aufwendig ist. Da gattungsgemäße Förderbahnen in Produktionsstraßen eingesetzt sind, führt der Zeitaufwand für Montage- und Demontagearbeiten zu entsprechenden Produktionsausfällen. Während bei durch Kettenschlösser geschlossenen Rollenketten der Zeitbedarf für den Austausch einer Rollenkette akzeptabel ist, müssen zum Einbau vernieteter endloser Rollenketten zwangsläufig alle Bauteile der Förderbahn entfernt werden, die einem axialen Aus- bzw. Einbau im Wege stehen.

Der Erfindung liegt die Aufgabe zugrunde, eine gattungsgemäße Förderbahn derart weiterzubilden, daß ohne großen Montage- und Demontageaufwand ein axialer Einbau endloser Zugorgane möglich ist.

Die Aufgabe wird erfindungsgemäß durch die kennzeichnenden Merkmale des Anspruches 1 gelöst.

Die offene Längsseite der Förderbahn ist von den Lagerböcken der fliegend gelagerten Umlenktrommeln abgewandt, so daß ohne größeren Montage- und Demontageaufwand das Zugorgan über die offene Längsseite axial entnommen werden kann. Hierzu ist wesentlich, daß die Trommeln auf dem Ende je eines Wellenstummels gelagert sind, so daß dieTrommel von einer Stirnseite her frei zugänglich ist. Ein endloses Zugorgan kann so ohne weiteres von der Trommel abgenommen und axial aus dem Kastenprofil herausgehoben werden. Ein zeitaufwendiger Ausbau von Lagern usw. ist daher nicht notwendig.

Vorzugsweise ist die Oberseite des Kastenprofils als Laufschiene für den Lasttrum ausgebildet, wobei insbesondere der Lasttrum auf der Oberseite des Kastenprofils gleitverschieblich aufliegt.

In besonderer Ausbildung der erfindungsgemäßen Förderbahn ist als Zugorgan ein Riemen, vorzugsweise ein Flachriemen, vorgesehen, wodurch ein sehr niedriges Betriebsgeräusch erzielt ist. Da der Lasttrum des Flachriemens auf der Oberseite des Kastenprofils insbesondere gleitverschieblich aufliegt, kann die auf dem Flachriemen aufstehende Transporteinheit unmittelbar über die Oberseite des Kastenprofils abgestützt werden. Überraschend hat sich gezeigt, daß eine derartige Anordnung Betriebszeiten von ca. 2 Jahren ermöglicht, ohne daß der Flachriemen ausfällt. Dies ist vermutlich darauf zurückzuführen, daß der Flachriemen über seine gesamte Länge gleichmäßig belastet ist und daher gleichmäßig verschleißt.

Falls erhebliche Lasten vom Kastenprofil abzustützen sind, kann es vorteilhaft sein, die Längskanten der offenen Längsseite des Kastenprofils über lösbare Versteifungsplatten miteinander zu verbinden. Die Versteifungsplatten sind dabei so ausgebildet, daß sie leicht ohne großen Montageaufwand entnommen werden können.

Zur Senkung der Unfallgefahr werden vorzugsweise aus Hartkunststoff bestehende Abdeckplatten an den Längskanten eingesteckt.

Weitere Merkmale der Erfindung ergeben sich aus den weiteren Ansprüchen, der Beschreibung und der Zeichnung, in der ein nachfolgend im einzelnen beschriebenen Ausführungsbeispiel der Erfindung dargestellt ist. Es zeigen:
- Fig. 1: eine Seitenansicht auf eine erfindungsgemäße Förderbahn mit einem Gurt als Zugorgan,
- Fig. 2: eine Draufsicht auf die Förderbahn nach Fig. 1,
- Fig. 3: einen Schnitt längs der Linie A-A in Fig. 1,
- Fig. 4: einen Schnitt längs der Linie B-B in Fig. 1,
- Fig. 5: einen Schnitt längs der Linie C-C in Fig. 1,
- Fig. 6: eine Draufsicht auf eine Spannstation der Förderbahn,
- Fig. 7: einen Teilschnitt durch die Antriebsstation der Förderbahn nach Fig. 1.

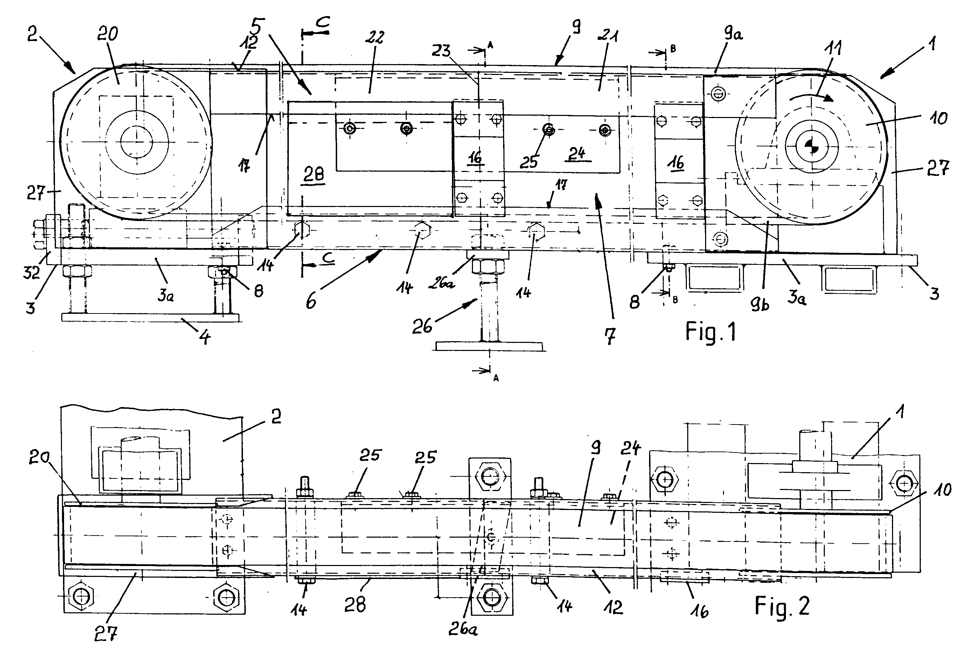

Die in Fig. 1 gezeigte Förderbahn besteht aus einer Antriebsstation 1 und einer Spannstation 2. Die Antriebsstation 1 und die Spannstation 2 weisen jeweils einen höhenverstellbaren Ständer 3 auf, der auf einem Fundament 4 aufsteht. Zwischen der Spannstation 2 und der Antriebsstation 1 erstreckt sich ein Längsträger 5, der als Kastenprofil 6 ausgebildet ist. Das Kastenprofil ist über die ganze Länge einer Längsseite 7 offen, wodurch sich ein C-förmiger Querschnitt des Kastenprofils 6 ergibt.

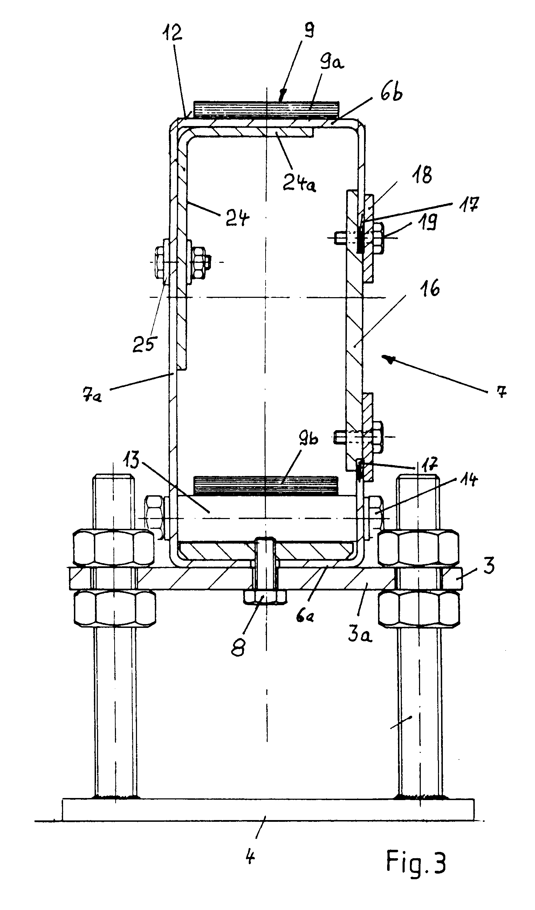

Der aus den Fig. 3 bis 5 im einzelnen ersichtliche Querschnitt des Kastenprofils 6 hat im wesentlichen Rechteckform und ist an seinen beiden Enden mit einer schmalen Längsseite 6a auf der Ständerplatte 3a der Antriebsstation 1 bzw. der Spannstation 2 festgelegt. Vorteilhaft sind hierzu Schrauben 8 verwendet.

Die im Ausführungsbeispiel gezeigte Förderbahn weist einen Flachriemen oder Gurt 9 auf, der eine Antriebstrommel 10 der Antriebsstation 1 sowie die Umlenktrommel 20 der Spannstation 2 umschlingt. Dabei liegt der Lasttrum 9a des Flachriemens 9 auf der durch die andere Schmalseite 6b des Kastenprofils gebildeten Oberfläche 12 des Längsträgers 5 auf. Die Oberseite 12 des Kastenprofils ist dabei als Laufschiene für den Lasttrum ausgebildet, vorzugsweise liegt der Lasttrum gleitverschiebbar auf der Oberseite 12 des Kastenprofils auf. Ausgehend von einer Drehrichtung 11 der Antriebstrommel 10 wird der Flachriemen 9 von der Spanntrommel 20 oberhalb des Kastenprofils 6 zur Antriebsstation 1 gefördert und läuft - innerhalb des Kastenprofils liegend - zur Spannstation 2 zurück. Der im Kastenprofil 6 liegende Leertrum 9b wird dabei über seine Länge von drehbar gelagerten Rollen 13 abgestützt, die auf mittels Schrauben im Kastenprofil 6 gehaltenen Laufbuchsen 15 gelagert sind. Falls gewünscht, kann zwischen den Längskanten 17 eine die Längskante übergreifende Versteifungsplatte 16 angeordnet sein, die in Fig. 3 im Schnitt dargestellt ist. Die Versteifungsplatte 16 hintergreift die Längskanten 17, welche in entsprechenden Ausnehmungen im Rand der Versteifungsplatte 16 liegen. Die Ausnehmungen sind durch Klemmplatten 18 abgedeckt, welche mittels Schrauben 19 fest mit der Versteifungsplatte 16 verbunden werden, wodurch die Längskanten 17 zwischen der Klemmplatte 18 und der Versteifungsplatte 16 geklemmt gehalten sind.

Im gezeigten Ausführungsbeispiel ist ein Längsträger 5 aus zwei Kastenprofilabschnitten 21 und 22 zusammengesetzt, welche an einer Stoßfuge 23 aneinanderstoßen. Zur Erzielung einer steifen Verbindung der beiden Kastenprofilabschnitte 21 und 22 ist im Inneren des Längsträgers ein die Stoßstelle 23 übergreifender Versteifungswinkel 24 vorgesehen, der mittels Schrauben 25 an der geschlossenen Längsseite 7a festgelegt ist. Der Versteifungswinkel ist dabei derart angeordnet, daß sein waagerecht liegender Schenkel 24a bündig an der schmalen Längsseite 6b des Kastenprofils anliegt.

Im gezeigten Ausführungsbeispiel ist ferner unterhalb der Stoßfuge 23 ein das Kastenprofil stützender Stellbock 26 vorgesehen, dessen Stützplatte 26a die Stoßfuge 23 in der unteren Schmalseite 6a des Kastenprofils überdeckt.

Um bei laufendem Fördergurt 9 die Unfallgefahr möglichst gering zu halten, ist vorgesehen, die Antriebstrommel 10 ebenso wie die Spanntrommel 20 mit einer Abdeckhaube 27 zu versehen. Die Abdeckhaube läßt jedoch den Trommelmantel im Anschluß an die als Führung ausgebildete Oberseite 12 des Kastenprofils 6 über einen Umfangswinkel von bis zu ca. 45° offen. Auf diese Weise können Förderbahnen stirnseitig aneinandergesetzt werden, da eine Übergabe des Förderguts über die benachbarten Trommeln über Kopf möglich ist.

Ferner ist zur Senkung der Unfallgefahren vorgesehen, die offene Längsseite 7 durch Kunststoffabdeckplatten zu verschließen. Vorzugsweise bestehen die Abdeckplatten 28 aus Polyvinylchlorid (PVC). Sie können ohne großen Aufwand entsprechend den abzudeckenden Bereichen der Längsseite abgelängt werden, so daß auch ein paßgenaues Einsetzen zwischen zwei Versteifungsplatten 16 problemlos möglich ist.

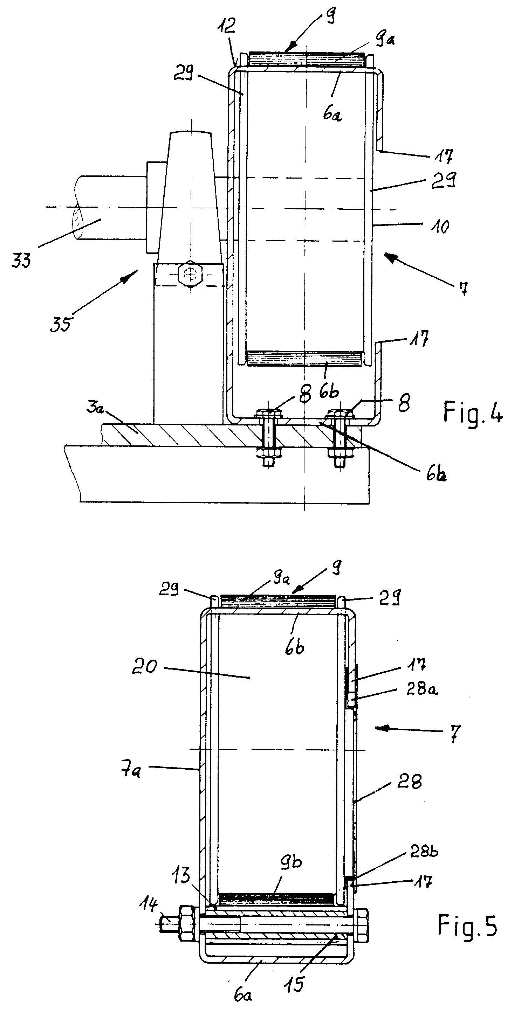

Eine Abdeckplatte 28 ist in Fig. 5 im Schnitt gezeigt. Sie weist an ihren Längsseiten Aufnahmen 28a, 28b auf, wobei die Aufnahme 28a tiefer als die Aufnahme 28b ausgebildet ist. Zum Aufstecken der Abdeckplatten wird die obere Längskante 17 in die Aufnahme 28a derart tief eingeführt, bis die Aufnahme 28b über die untere Längskante 17 eingeschwenkt werden kann. Dann wird die Abdeckplatte 28 in Richtung auf die untere Längskante 17 verschoben, bis die untere Längskante 17 spielfrei in der unteren Aufnahme 28b gehalten ist. Da die Aufnahme 28a tiefer als die Aufnahme 28b ausgeführt ist, liegt die obere Längskante 17 in montierter Lage der Abdeckplatte 28 nicht über die ganze Tiefe in der Aufnahme 28a, ist aber in der Aufnahme gehalten.

Als Flachriemen oder Gurt ist ein Textilgurt vorgesehen. Es kann jedoch in Abhängigkeit vom Einsatzfall ein Gurt mit Stahleinlage vorgesehen sein, um ein Längen des Gurts bei großer Last so weit wie möglich auszuschließen. Da die Trommeln 10 und 20 seitliche Führungswangen 29 aufweisen, ist der Flachriemen oder Gurt relativ zum Längsträger seitlich fixiert gehalten.

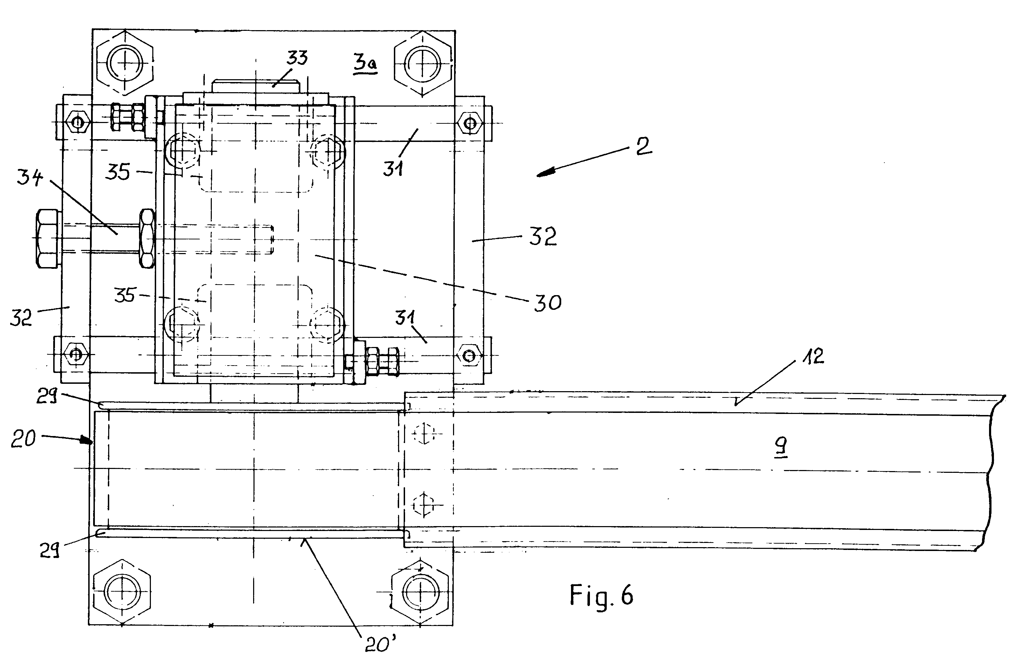

Die in Fig. 6 dargestellte Spanneinheit 2 besteht im wesentlichen aus einem Schlitten 30, der auf zwei Führungsstäben 31 längsverschiebbar geführt ist. Die Führungsstäbe 31 sind an ihren Enden durch Platten 32 gehalten, die an der Ständerplatte 3a festgelegt sind. Auf dem Schlitten 30 ist in Lagerböcken 35 ein Wellenstummel 33 gehalten, der mit einem Ende 33a über einen Lagerbock 35 herausragt. Auf das Ende 33a ist die Spanntrommel 20 aufgesteckt. Somit ist die Spanntrommel auf nur einer axialen Stirnseite drehfest am Wellenstummel 33 gehalten, während die andere axiale Stirnseite 20' frei liegt. Der Schlitten 30 ist über eine Stellschraube 34, die in einer Platte 32 gehalten ist, in Längsrichtung der Führungsstäbe 31 verstellbar.

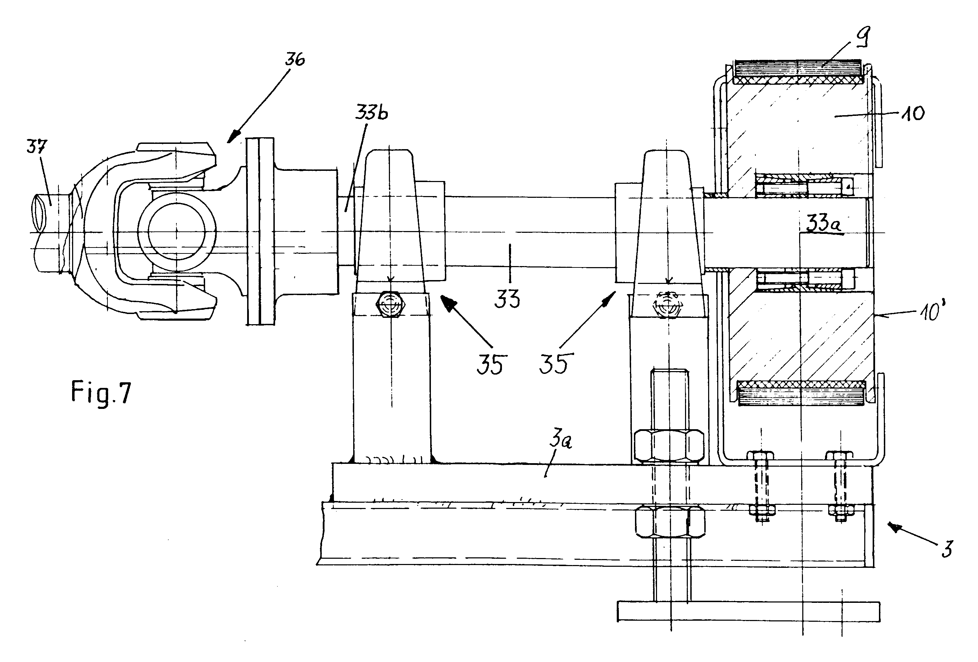

Die in Fig. 7 gezeigte Antriebseinheit weist ebenfalls einen Wellenstummel 33 auf, auf dessen eines Ende 33a die Antriebstrommel 10 drehfest aufgesteckt ist. Der Wellenstummel 33 ist mittels auf einer Stirnseite der Trommel 10 liegenden Lagerböcken 35 unmittelbar auf der Ständerplatte 3a gehalten. Die andere axiale Stirnseite 10' der Trommel 10 liegt frei. Das andere Ende 33b des Wellenstummels 33 ist mit einem Kardangelenk 36 verbunden, welches über eine Kardanwelle 37 mit einem nicht dargestellten Antrieb in Verbindung steht. Das Kardangelenk 36 ist vorgesehen, um einen beim Ausrichten der Förderbahn möglichen Versatz zwischen dem Wellenstummel 33 und der antreibenden Kardanwelle 37 auszugleichen.

Muß bei der erfindungsgemäßen Förderbahn der Fördergurt ausgewechselt werden, ist der Gurt durch entsprechende Drehung der Spannschraube 34 zu entspannen, bis der Gurt von der Spanntrommel 20 abgehoben und axial abgezogen werden kann. Nach Entfernen der Abdeckplatten 28 und ggf. angeordneter Versteifungsplatten 16 kann der gesamte Gurt dann axial aus dem Kastenprofil herausgenommen werden, da die offene Längsseite 17 erfindungsgemäß von den Lagerböcken 35 der Wellenstummel 33 abgewandt liegt, also den freien axialen Stirnseiten 10' bzw. 20' der Trommeln 10 und 20 zugeordnet liegt. Die vorgesehene fliegende Lagerung der Trommeln 10 und 20 gewährleistet, daß bei dem axialen Herausheben des geschlossenen Gurtes 9 keine störenden Lager demontiert werden müssen. Ebenso kann dann ein neuer Gurt axial eingesetzt und auf die Trommeln aufgezogen werden. Die Montage- und Demontagearbeiten beschränken sich daher auf wenige Handgriffe, so daß der Zeitaufwand zum Austausch eines Fördergurtes sehr gering ist. Die Ausfallzeit der Förderbahn ist somit sehr klein, was insbesondere bei in der Produktion eingesetzten Förderbahnen von erheblicher Bedeutung ist.

## Patentansprüche

1. Förderbahn für Transporteinrichtungen wie Skids oder dergleichen, mit einem endlosen Zugorgan (9), das über mindestens eine angetriebene Trommel (10) und eine weitere Trommel (20) geführt und angetrieben ist, wobei die Last der Transporteinrichtung über ein zwischen den Trommeln (10, 20) sich erstreckendes Kastenprofil (6) abgestützt ist, dessen Oberseite (12) als Laufschiene für den Lasttrum des Zugorgans (9) ausgebildet ist und der Leertrum des Zugorgans (9) im Kastenprofil liegend zurückläuft,
dadurch gekennzeichnet, daß die Trommeln (10, 20) an dem einen Ende (33a) jeweils eines in Lagerböcken (35) liegenden Wellenstummels (33) gehalten sind und das Kastenprofil (6) auf seiner den Lagerböcken (35) abgewandten seitlichen Längsseite (7) über dessen ganze Länge offen ist.

2. Förderbahn nach Anspruch 1,
dadurch gekennzeichnet, daß der Lasttrum (9a) auf der Oberseite (12) des Kastenprofils (6) gleitverschieblich aufliegt.

3. Förderbahn nach Anspruch 1 oder 2,
dadurch gekennzeichnet, daß der Leertrum (9b) im Kastenprofil (6) über Rollen (13) abgestützt ist.

4. Förderbahn nach einem der Ansprüche 1 bis 3,
dadurch gekennzeichnet, daß das Zugorgan (9) ein Riemen, vorzugsweise ein Flachriemen ist.

5. Förderbahn nach Anspruch 4,
dadurch gekennzeichnet, daß der Flachriemen ein Stahleinlagen aufweisender Gurt ist.

6. Förderbahn nach Anspruch 4,
dadurch gekennzeichnet, daß der Flachriemen ein Textilgurt ist.

7. Förderbahn nach einem der Ansprüche 1 bis 6,
dadurch gekennzeichnet, daß die Längskanten (17) der offenen Längsseite (7) des Kastenprofils (6) über lösbare Versteifungsplatten (16) miteinander verbunden sind.

8. Förderbahn nach Anspruch 7,
dadurch gekennzeichnet, daß die Versteifungsplatten (16) über schraubbare Klemmlaschen (18) am Kastenprofil (6) gehalten sind.

9. Förderbahn nach einem der Ansprüche 1 bis 8,
dadurch gekennzeichnet, daß die offene Längsseite (7) durch an den Längskanten (17) einsteckbare Abdeckplatten (28) verschließbar ist, die vorzugsweise aus Hartkunststoff, insbesondere PVC, bestehen.

10. Förderbahn nach einem der Ansprüche 1 bis 9,
dadurch gekennzeichnet, daß der Längsträger (5) aus zwei auf Stoß aneinandergesetzten Kastenprofilabschnitten (21, 22) besteht, wobei im Kastenprofil (6) angeordnete Verbindungsglieder (24) die Kastenprofilabschnitte (21, 22) steif miteinander verbinden.

## Claims

1. Transporting track for transporting devices such as skids or the like, with an endless traction member (9), which is guided and driven by way of at least one driven drum (10) and a further drum (20), the load of the transporting device being supported by way of a box section (6) extending between the drums (10, 20), the upper side (12) of which box section is constructed as a guide rail for the load side of the traction member (9) and the return side of the traction member (9) travels back lying in the box section, characterised in that the drums (10, 20) are retained at one end (33a) respectively of a stub shaft (33) lying in bearing blocks (35) and the box section (6) is open over its entire length on its lateral longitudinal side (7) remote from the bearing blocks (35).

2. Transporting track according to Claim 1, characterised in that the load side (9a) rests in a slideable manner on the upper side (12) of the box section (6).

3. Transporting track according to Claim 1 or 2, characterised in that the return side (9b) is supported in the box section (6) by way of rollers (13).

4. Transporting track according to one of Claims 1 to 3, characterised in that the traction member (9) is a belt, preferably a flat belt.

5. Transporting track according to Claim 4, characterised in that the flat belt is a strap comprising steel inserts.

6. Transporting track according to Claim 4, characterised in that the flat belt is a textile strap.

7. Transporting track according to one of Claims 1 to 6, characterised in that the longitudinal edges (17) of the open longitudinal side (7) of the box section (6) are connected to each other by way of releasable stiffening plates (16).

8. Transporting track according to Claim 7, characterised in that the stiffening plates (16) are retained by way of screwable clamping rings (18) on the box section (6).

9. Transporting track according to one of Claims 1 to 8, characterised in that the open longitudinal side (7) can be closed by cover plates (28) able to be inserted on the longitudinal edges (17), which cover plates (28) preferably consist of hard synthetic material, in particular PVC.

10. Transporting track according to one of Claims 1 to 9, characterised in that the longitudinal support (5) consists of two butt-jointed box section segments (21, 22), connecting members (24) located in the box section (6) rigidly connecting the box section segments (21, 22) to each other.

## Revendications

1. Chemin de transport pour moyens de transport tels que bacs ou analogues, comportant un organe tracteur sans fin (9) qui passe sur au moins un tambour entraîné (10) et un autre tambour (20) et est entraîné, la charge du moyen de transport étant supportée par l'intermédiaire d'un profilé caisson (6) qui s'étend entre les tambours (10, 20) et dont la face supérieure (12) forme une glissière pour le brin chargé de l'organe tracteur (9), et le brin vide de l'organe tracteur (9) revenant à l'intérieur du profilé caisson, caractérisé par le fait que les tambours (10, 20) sont montés chacun à une extrémité (33a) d'un bout d'arbre (33) monté dans des paliers (35) et le profilé caisson (6) est ouvert sur toute sa longueur sur sa face longitudinale latérale (7) opposée aux paliers (35).

2. Chemin de transport selon la revendication 1, caractérisé par le fait que le brin chargé (9a) repose et glisse sur la face supérieure (12) du profilé caisson (6).

3. Chemin de transport selon l'une des revendications 1 et 2, caractérisé par le fait que le brin vide (9b) est supporté dans le profilé caisson (6) par des rouleaux (13).

4. Chemin de transport selon l'une des revendications 1 à 3, caractérisé par le fait que l'organe tracteur (9) est une courroie, de préférence une courroie plate.

5. Chemin de transport selon la revendication 4, caractérisé par le fait que la courroie plate présente des armatures en acier.

6. Chemin de transport selon la revendication 4, caractérisé par le fait que la courroie plate est en textile.

7. Chemin de transport selon l'une des revendications 1 à 6, caractérisé par le fait que les bords longitudinaux (17) de la face longitudinale ouverte (7) du profilé caisson (6) sont réunis par des plaques de renfort amovibles (16).

8. Chemin de transport selon la revendication 7, caractérisé par le fait que les plaques de renfort (16) sont montées sur le profilé caisson (6) au moyen de plaques de serrage à vis (18).

9. Chemin de transport selon l'une des revendications 1 à 8, caractérisé par le fait que la face longitudinale ouverte (7) peut être fermée par des plaques de couverture (28) de préférence en plastique rigide, en particulier en PVC, qui peuvent être appliquées sur les bords longitudinaux (17).

10. Chemin de transport selon l'une des revendications 1 à 9, caractérisé par le fait que le longeron (5) est constitué de deux tronçons de profilé caisson aboutés (21, 22) qui sont assemblés rigidement par des éléments d'assemblage (24) placés dans le profilé caisson (6).
